# DEMANDE DE BREVET EUROPEEN

(11) **EP 1 354 817 A2**
(43) Date de publication de la demande: **22.10.2003**
(21) Numéro de dépôt: 03370011.3
(22) Date de dépôt: 25.03.2003
(51) Int. Cl.: B65D 77/22, B65D 51/16, F16K 17/38, F16K 24/04, F16K 31/00

(54) **Emballage avec valve thermostatique**

(30) Priorité: 29.03.2002 FR 0204026
(71) Demandeur: Proplast, 59148 Flines lez Raches (FR)
(72) Inventeur: Cross, Anthony Bernard, 85520 Saint Vincent sur Jard (FR); Guitton, Didier, 17300 Rochefort sur Mer (FR)
(74) Mandataire: Hénnion, Jean-Claude

(57) **Abrégé**

L'emballage est fermé par un opercule (3) et est équipé d'une valve (12) rapportée par-dessus une zone d'ouverture (4) d'une section supérieure à 10mm² de préférence de l'ordre de 30 à 50mm² donnant sur l'intérieur de l'emballage et pratiquée dans ledit opercule (3). Cette zone d'ouverture est soit un orifice pratiqué dans un opercule plan soit une chambre en creux percée d'un trou de dégazage de taille réduite.

La valve comprend exclusivement une feuille souple (7), s'étendant par-dessus la zone d'ouverture (4) et un composé d'étanchéité (11) disposé entre la feuille souple (7) et l'opercule (3).

Le composé d'étanchéité (11) est solide à température ambiante, passe à l'état liquide non collant par élévation de température. Lors d'un traitement thermique, on a une succession de séquences de dégazage avec ouverture et fermeture de la valve. L'ouverture de la valve est obtenue sous l'effet d'une surpression interne à l'emballage (1) suffisante pour créer un canal d'échappement dans le composé d'étanchéité (11), à l'état liquide, réparti entre l'opercule (3) et la feuille souple (7), ledit canal (13) s'étendant entre la zone d'ouverture (4) et un bord de la feuille souple. La fermeture de la valve est obtenue , après dégazage partiel par le canal d'échappement et alors qu'il règne encore une surpression dans l'emballage (1), par refermeture dudit canal d'échappement du fait des forces de cohésion entre le composé d'étanchéité (11) à l'état liquide et l'opercule (3) d'une part et la feuille souple (7) d'autre part. Lors du refroidissement en fin de traitement thermique, la solidification du composé d'étanchéité (11) fixe la feuille souple (7) sur l'opercule (3) et verrouille ainsi la valve dans la position fermée.

## Description

La présente invention concerne un emballage , équipé d'une valve, dans lequel un produit est soumis à un traitement thermique provoquant un dégazage, ladite valve étant en communication avec au moins un orifice donnant dans l'emballage et coopérant avec un composé d'étanchéité pour permettre le dégazage par ledit orifice pendant le traitement et empêchant le retour d'air en fin de traitement. Un tel emballage est applicable dans des domaines très divers tels que la cuisson d'aliments , la stérilisation de produits à usage unique dans le domaine médical, l'emballage de préparations pharmaceutiques, médicinales, cosmétologiques.

On connaît par le document WO.01/09003 un emballage de ce type dans lequel la valve est constituée d'un socle, d'une feuille souple et d'un composé d'étanchéité. Le socle présente une partie centrale évidée. Il est totalement fixé à la paroi de l'emballage de telle sorte que sa partie centrale évidée est à l'aplomb de l'orifice de dégazage pratiqué dans ladite paroi. La feuille souple est partiellement fixée au socle , par exemple selon deux bords longitudinaux dudit socle. La paroi de l'emballage dans laquelle est pratiqué l'orifice de dégazage et qui donc supporte la valve peut être un opercule.

Le composé d'étanchéité sélectionné dans ce document WO.01/09003 est solide ou pâteux à température ambiante et passe , lors d'un traitement thermique, à l'état liquide et non-collant. Ainsi lors du traitement thermique que subit l'emballage, on peut obtenir le passage de manière répétitive d'une position de fermeture de la valve dans laquelle la feuille souple est appliquée contre le socle à une position d'ouverture de la valve dans laquelle la feuille souple est écartée du socle. De manière caractéristique , selon ce document antérieur , la position de fermeture est obtenue à partir d'une valeur donnée de la pression interne dans l'emballage qui correspond à une surpression par rapport à la pression extérieure. De préférence la valve s'ouvre à une pression interne dans l'emballage de l'ordre de 10mbar et se ferme à une pression interne dans l'emballage de l'ordre de 3mbar.

Un tel emballage donne toutes satisfactions , en particulier pour la cuisson de produits alimentaires subissant un traitement thermique à une température supérieure à 60°C.

La solution proposée par la présente invention donne des résultats similaires à ceux obtenus par la valve du document WO.01/09003 en terme de fonctionnement et de dégazage. Cependant elle a le mérite d'être encore plus simple et donc moins coûteuse, même si elle est plus limitée en terme d'application.

Il s'agit, de manière connue, d'un emballage qui est équipé d'une valve et qui est fermé par un opercule, ladite valve étant rapportée par-dessus un orifice donnant sur l'intérieur de l'emballage et pratiqué dans ledit opercule.

De manière caractéristique , selon l'invention :
a) l'opercule est dans un matériau rigide ou semi-rigide,
b) la valve comprend exclusivement :
   - une feuille souple , s'étendant par-dessus une zone d'ouverture formée dans l'opercule et comportant l'orifice
   - et un composé d'étanchéité disposé entre la feuille souple et l'opercule,
c) la zone d'ouverture a une section supérieure à 10 mm².

De plus le composé d'étanchéité est solide à température ambiante, étant alors imperméable aux gaz , aux liquides et de préférence aux micro-organismes , et passe à l'état liquide non collant par élévation de température. Ainsi, lors d'un traitement thermique , l'ouverture de la valve est obtenue sous l'effet d'une surpression interne à l'emballage suffisante pour créer un canal d'échappement dans le composé d'étanchéité réparti entre l'opercule et la feuille souple , ledit canal s'étendant entre la zone d'ouverture et un bord de la feuille souple, et la fermeture de la valve est obtenue, alors qu'il règne encore une surpression dans l'emballage, par refermeture dudit canal d'échappement du fait des forces de cohésion entre le composé d'étanchéité à l'état liquide et l'opercule d'une part et la feuille souple d'autre part. La solidification du composé d'étanchéité lors du refroidissement en fin de traitement thermique fixe la feuille souple sur l'opercule et verrouille ainsi la valve dans la position fermée.

Selon la disposition particulière de la présente invention, qui est certes limitée aux emballages qui sont fermés par un opercule rigide ou semi-rigide, la valve est d'une structure particulièrement simple puisqu'elle est composée uniquement de la feuille souple et du composé d'étanchéité , le fonctionnement adéquat de la valve ne pouvant être obtenu que pour autant que la zone d'ouverture formée dans l'opercule ait une section suffisante ,d'au moins 10 mm².

Dans une variante de réalisation , la zone d'ouverture est constituée par un simple orifice de dégazage , de section supérieure à 10 mm², pratiqué dans un opercule plan.

Il est à noter que dans le document WO.01/09003, le trou de dégazage a un diamètre de l'ordre de 1mm, et donc une section de l'ordre de 0,8mm².

Dans une variante de réalisation, la zone d'ouverture est constituée par une chambre en creux , formée par exemple par emboutissage dans l'opercule , ladite chambre de section supérieure à 10 mm² étant percée d'un orifice de dégazage de section plus petite.

De préférence la zone d'ouverture pratiquée dans l'opercule a une section de l'ordre de 30 à 50 mm².

Dans un mode particulier de réalisation, l'opercule est en métal. Il peut notamment s'agir d'un couvercle fermé par vissage sur la partie haute de l'emballage.

Dans un mode particulier de réalisation, la feuille souple est fixée partiellement, par exemple par collage, sur l'opercule de part et d'autre de la zone d'ouverture avec au moins une zone non fixée et le canal d'échappement s'étend entre la zone d'ouverture et un bord de la feuille souple dans ladite zone non fixée.

Dans un mode particulier de réalisation, la face supérieure de la feuille souple est fixée , par exemple par collage , sur un élément plan, du type étiquette , lui-même fixé partiellement sur l'opercule de part et d'autre de la zone d'ouverture , avec au moins une zone non fixée. Dans ce cas le canal d'échappement s'étend entre la zone d'ouverture et le bord de la feuille souple qui est en regard de la zone non fixée de l'élément plan.

Dans un mode particulier de réalisation , où il faut absolument éviter tout risque de contamination de la valve avec les produits se trouvant à l'intérieur de l'emballage , ledit emballage comporte un élément plan poreux fixé , au-dessus du trou de dégazage, sur la face intérieure de l'opercule.

Dans un mode particulier de réalisation, permettant une ouverture plus facile de l'opercule, l'emballage comporte une languette , fixée à ou prolongeant la feuille souple ou l'élément plan du type étiquette. En exerçant une traction sur la languette , l'utilisateur détache la feuille souple de l'opercule et dégage la zone d'ouverture de l'opercule , ce qui corrélativement remet l'intérieur de l'emballage à la pression atmosphérique.

La présente invention sera mieux comprise à la lecture de la description qui va être faite d'exemples de réalisation d'un emballage fermé par un couvercle métallique vissé équipé d'une valve formée exclusivement d'une feuille souple et d'un composé d'étanchéité, illustré par le dessin annexé dans lequel :
La figure 1 est une représentation schématique , en coupe, d'un premier exemple d' emballage, dans lequel la portion de l'opercule recouverte par la valve est plane,
Les figures 2 et 3 illustrent , en vue de dessus, l'emballage de la figure 1 en position fermée de la valve (figure 2) et en position ouverte de la valve (figure 3) lors d'un traitement thermique.
La figure 4 est une représentation schématique , en coupe, du couvercle d'un second exemple d'emballage , dans lequel l'orifice de l'opercule est pourvu d'un élément intérieur poreux,
La figure 5 est une vue schématique en perspective d'un couvercle d'un troisième exemple d'emballage comportant une étiquette informative et
La figure 6 est une vue schématique en perspective du couvercle d'un quatrième exemple d'emballage dont la valve est équipée d'une languette d'arrachage,
Les figures 7 et 8 sont des représentations schématiques , en coupe , du couvercle d'un cinquième exemple d'emballage dans lequel la portion de l'opercule recouverte par la valve comporte une chambre en creux constituant la zone d'ouverture , la valve étant dans sa position initiale en ce qui concerne la figure 7 et étant dans sa position de fermeture après traitement thermique et refroidissement en ce qui concerne la figure 8,
La figure 9 est une représentation schématique , en coupe , du couvercle d'un sixième exemple d'emballage dans lequel la zone d'ouverture de l'opercule est une chambre en creux se présentant sous la forme d'un bossage annulaire.

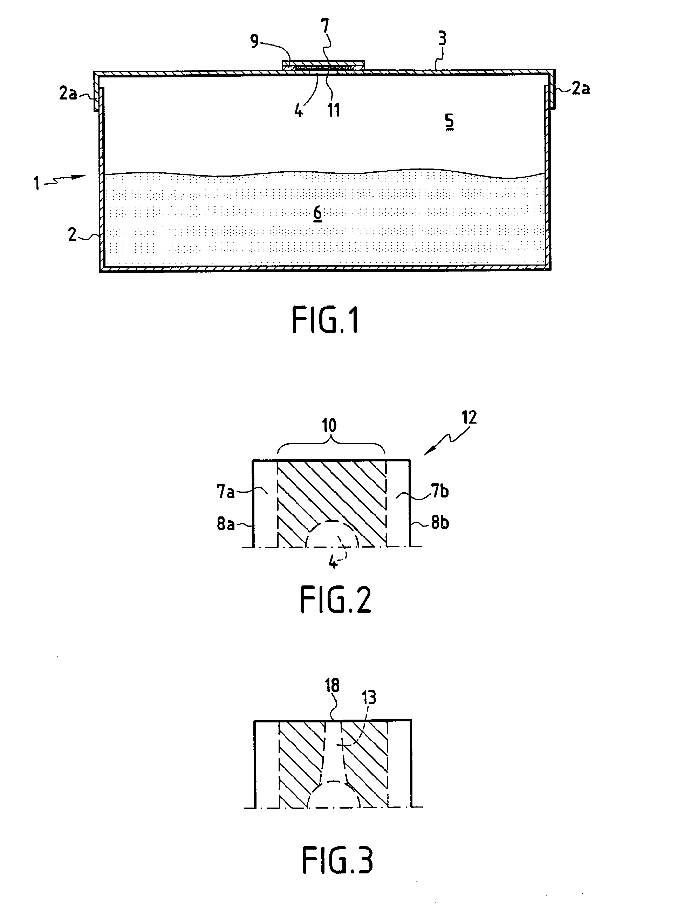

L'emballage 1 selon le premier exemple qui est illustré à la figure 1 est constitué par un pot 2 et par son opercule 3 rigide ou semi-rigide de fermeture , par exemple un couvercle, vissable d'une manière étanche sur la partie supérieure 2a du pot 2. Cet opercule 3 est percé d'un orifice 4, lequel est destiné à laisser s'échapper les gaz qui sont produits dans la partie interne 5 de l'emballage 1 , lors du traitement thermique des produits 6 contenus dans le pot 2.

L'orifice 4, pratiqué dans une portion plane de l'opercule 3, est un trou circulaire ayant un diamètre qui est de plusieurs millimètres, étant de préférence de l'ordre de 7 mm, ce qui correspond à une section de l'ordre de 38,5mm².

Par dessus l'orifice 4 est placée une feuille souple 7, qui dans l'exemple illustré a une configuration rectangulaire ou carrée. Cette feuille souple 7 est fixée , de préférence, uniquement selon deux zones latérales 7a, 7b, bordant deux côtés opposés 8a, 8b de la feuille 7, de part et d'autre de l'orifice 4. La fixation de la feuille 7 est obtenue grâce à une enduction adhésive 9 interposée entre les deux dites zones latérales 7a, 7b et l'opercule 3. Entre les deux zones de fixations 7a, 7b s'étendent deux zones non fixées 10.

Un composé d'étanchéité 11 est disposé entre la feuille souple 7 et l'opercule 3. Ce composé d'étanchéité doit présenter la particularité, connue par le document WO.01/09003 d'être solide (ou éventuellement pâteux) à température ambiante, étant alors imperméable aux gaz, aux liquides et également de préférence aux micro-organismes et de passer à l'état liquide , non collant , par élévation de température.

Ce composé d'étanchéité 11 est de préférence choisi parmi un groupe comprenant , en pur ou en mélange , des paraffines , des composés à comportement paraffinique avec paliers de solidification, laquelle se produit sous forme de macro-cristaux, des cires micro-cristallines et des paraffines additivées. Il peut s'agir d'une paraffine ou d'un composé au comportement paraffinique ayant un palier de solidification compris entre 48°C et 53°C, notamment 51°C. Il peut s'agir d'une cire micro-cristalline dont le point de fusion est compris entre 64 et 72°C. Il peut s'agir d'une paraffine additivée dont le point de fusion est compris entre 65 et 70°C.

Le composé d'étanchéité 11 est de préférence disposé sur la face interne de la feuille souple 7. Il peut s'agir d'une enduction continue à l'exception des zones de fixation 7a, 7b, ou éventuellement d'une enduction partielle, telle qu'illustrée sur la figure 2 en hachuré , la zone à l'aplomb de l'orifice 4 n'étant pas enduite. Ceci n'est toutefois pas exclusif de l'invention, le composé d'étanchéité 11 pouvant être placé entre la feuille souple 7 et l'opercule 3 sous forme d'une goutte.

Le fonctionnement de la valve 12 s'appuie sur le comportement du composé d'étanchéité 11 et sur les forces capillaires entre ledit composé d'étanchéité 11 à l'état liquide , qui s'exercent entre d'une part l'opercule 3 et d'autre part la feuille souple 7.

Lors d'un traitement thermique , le composé d'étanchéité 11 qui est à l'état solide ou éventuellement pâteux passe à l'état liquide lorsque la température dépasse le palier de solidification ou atteint le point de fusion du composé d'étanchéité 11. Ledit composé , à l'état liquide , se répartit par capillarité sur toute la surface disponible de la valve 12, entre la feuille souple 7 et l'opercule 3. Etant donné que cette élévation de température se fait concomitamment avec une élévation de la pression dans la partie interne 5 de l'emballage 1, le composé d'étanchéité 11 à l'état liquide ne peut pas pénétrer par l'orifice 4 , étant repoussé par ladite pression.

Tant que les forces dues à la pression interne sont inférieures aux forces de cohésion capillaires qui répartissent le composé d'étanchéité 11 à l'état liquide dans toute la zone non fixée 10, la valve 12 est fermée. La partie interne 5 de l'emballage 1 est cependant en surpression par rapport à la pression extérieure , ce qui élimine tout risque de contamination du produit 6 contenu dans l'emballage 1 du fait que l'on évite ainsi toute possibilité de retour d'air.

Lorsque la pression dans la partie interne 5 de l'emballage 1 augmente et plus précisément lorsque les forces exercées par cette pression interne sont supérieures aux forces de cohésion capillaires entre la couche de composé d'étanchéité 11 à l'état liquide et les deux parois formées par la feuille souple 7 et l'opercule 3 , il y a alors séparation des deux dites parois par refoulement du composé d'étanchéité à l'état liquide et création d'un canal d'échappement 13. Ce canal s'étend entre l'orifice 4 et le bord 18 de la feuille 7 correspondant à la zone non fixée 10, comme cela apparaît à l'examen de la figure 3. Le dégagement des gaz vers l'extérieur de l'emballage 1 se produit par ce canal d'échappement 13. Lorsque la pression interne diminue du fait de ce dégazage et atteint une valeur donnée , qui correspond néanmoins à une surpression par rapport à la pression extérieure, l'action des forces de cohésion capillaires redevient supérieure à celle des forces exercées par cette surpression et provoque un déplacement inverse du composé d'étanchéité 11 à l'état liquide, qui tend à refermer ledit canal d'échappement 13.

La fermeture de ce canal d'échappement 13 se fait progressivement , en fonction de la diminution de la pression interne, ce qui assure une certaine régulation du débit de dégazage.

Lorsque le canal d'échappement 13 est refermé , la valve 12 est en position fermée , alors que le composé d'étanchéité 11 est encore à l'état liquide. Pendant tout le traitement thermique , on a donc une succession d'ouvertures et de fermetures de la valve 12, comme décrit ci-dessus, qui correspond à une succession de séquences de dégazage.

A la fin du traitement thermique , on refroidit l'emballage , ce qui a pour effet de diminuer la pression interne de l'emballage 1 , de confirmer la fermeture de la valve 12 , de faire passer le composé d'étanchéité 11 de l'état liquide à l'état solide ou pâteux , ce qui verrouille la valve 12, et enfin de créer un vide dans la partie interne 5 de l' emballage 1.

Pour assurer le fonctionnement qui vient d'être décrit, et du fait que la feuille souple 7 est tenue sur l'opercule 3 par les forces capillaires du composé d'étanchéité dans l'état liquide, il importe que l'action des forces exercées par la pression interne s'applique sur une surface importante de la feuille souple 7. C'est pourquoi il est nécessaire que l'orifice 4 pratiqué dans la portion plane de l'opercule 3 et qui fait office à lui seul de zone d'ouverture ait une section importante , de l'ordre ou supérieure à 10 mm²

Dans un exemple précis de réalisation selon lequel l'opercule 3 est un couvercle métallique , totalement rigide , l'orifice 4 est un trou circulaire de 7mm de diamètre , ce qui représente une section de l'ordre de 38,5mm². Un trou de 1mm de diamètre ne permettrait pas le fonctionnement ci-dessus de la valve.

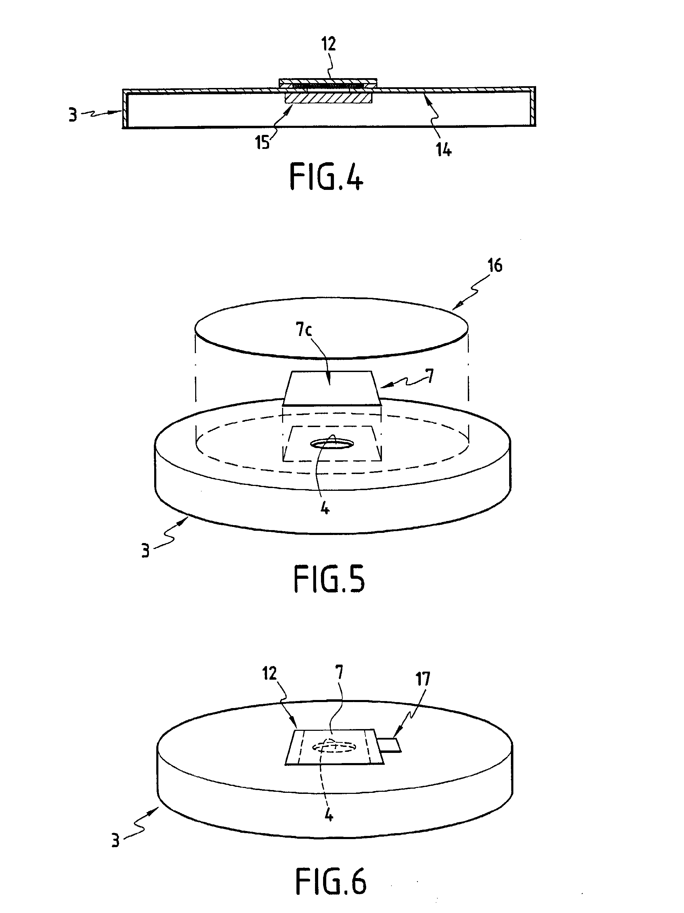

Dans le second exemple de réalisation qui est illustré à la figure 4, l'opercule 3 est pourvu, sur sa face intérieure 14, d'un élément poreux 15 qui est fixé par-dessus l'orifice 4. Cet élément poreux 15 est destiné à permettre le dégazage de la partie intérieure de l'emballage tout en empêchant toute possibilité de contamination entre la valve 12 et les produits contenus dans l'emballage. Cet élément poreux 15 doit donc être imperméable aux liquides.

Dans le troisième exemple de réalisation qui est illustré à la figure 5 , la feuille souple 7 n'est pas fixée sur l'opercule 3 , mais sur une étiquette 16 qui est destinée à donner des informations au consommateur sur le produit contenu dans l'emballage. La fixation de la feuille souple 7 sur l'étiquette 16 est réalisée par exemple par collage de la face supérieure 7c de ladite feuille souple 7 contre la face inférieure de l'étiquette 16. Par contre l'étiquette 16 est , quant à elle , fixée partiellement sur l'opercule 3 de manière à dégager au moins une zone non fixée. Lors du fonctionnement de la valve 12, le canal d'échappement , formé dans le composé d'étanchéité à l'état solide, s'étend entre l'orifice 4 et le bord de la feuille 7a se trouvant en regard de la zone non fixée de l'étiquette 16.

Dans le quatrième exemple de réalisation qui est illustré à la figure 6 , l'emballage comporte une languette d'arrachage 17 qui prolonge ou qui est fixée à la feuille souple 7 de la valve 12. Etant donné qu'en fin de refroidissement, il se crée un vide à l'intérieur de l'emballage , l'ouverture de l'opercule 3 nécessite d'exercer une force supplémentaire s'opposant à cette mise sous vide. Grâce à la languette d'arrachage 17, l'utilisateur peut facilement dégager la feuille souple 7 de l'orifice 4 , ce qui rétablit l'équilibre de pression entre la partie interne de l'emballage et l'air ambiant. On obtient donc une ouverture facilitée de l'emballage.

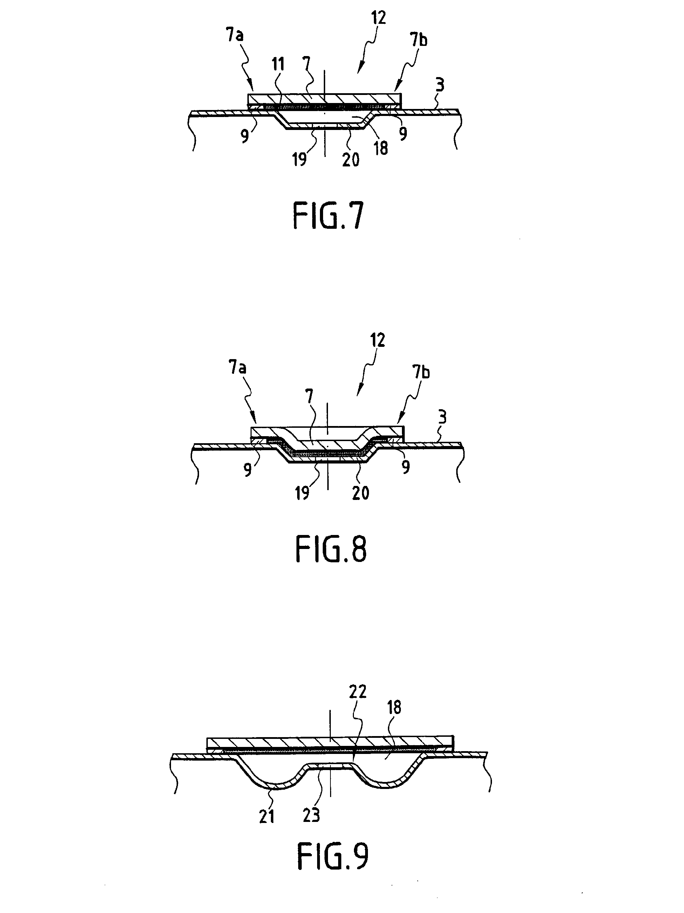

Dans le cinquième exemple de réalisation qui est illustré aux figures 7 et 8 , la portion de l'opercule 3 sur laquelle est rapportée la valve 12 n'est pas totalement plane mais présente un enfoncement ou chambre en creux 18 qui constitue la zone d'ouverture ayant une section supérieure à 10 mm² par dessus laquelle s'étend la feuille souple 7 et le composé d'étanchéité 11 constituant la valve 12. Dans l'exemple illustré , cette chambre en creux est formée par emboutissage du matériau constituant l'opercule 3. Elle a une forme légèrement tronconique. De plus il s'agit d'une chambre ouverte, donnant sur l'intérieur de l'emballage grâce à un orifice 19 de dégazage qui est pratiqué dans l'opercule 3 au niveau du fond 20 de la chambre en creux 19. Cet orifice 19 est un trou circulaire de section beaucoup plus faible que la section de la chambre en creux 18. Il s'agit par exemple d'un trou ayant un diamètre de 2mm, ce qui correspond à une section de l'ordre de 3, 15mm².

Comme dans le premier exemple , la feuille souple 7 est fixée grâce à une enduction adhésive 9 selon deux zones latérales 7a, 7b.

Le fonctionnement de la valve 12 de ce cinquième exemple est identique à ce qui était décrit précédemment en ce qui concerne le premier exemple. La chambre interne 18 étant en communication avec l'intérieur de l'emballage grâce à l'orifice 19, l'action des forces exercées par la pression interne s'appuie sur la surface de la feuille souple 7 qui est en regard de la chambre interne 18 , qui fait office de zone d'ouverture de section de l'ordre ou supérieure à 10 mm².

La différence essentielle entre le premier et ce cinquième exemple réside dans l'étape ultime de verrouillage de la valve lors du refroidissement après le traitement thermique. Cette étape est illustrée à la figure 8. En fin de traitement thermique , lors du refroidissement de l'emballage , se combinent d'une part la baisse de la température qui fait passer le composé d'étanchéité 11 de l'état liquide à l'état solide ou pâteux et d'autre part la diminution de la pression interne dans l'emballage qui crée un certain vide et donc une certaine dépression dans la chambre en creux 18, dépression qui entraîne la déformation de la feuille souple 11 qui vient se plaquer sur le fond 20 de ladite chambre en creux 18 par-dessus l'orifice 19 de dégazage. On a ainsi un verrouillage amélioré de la valve 12 du fait d'une plus grande surface de contact entre la feuille souple 7 et l'opercule 3 grâce à l'application de ladite feuille sur la paroi de fond 20 de la chambre en creux 18. En effet dans le premier exemple , cette surface de contact était limitée à la portion de la feuille souple qui entourait l'ouverture 4.

Cette variante de réalisation est avantageuse du fait qu'en cas de remontée de pression à l'intérieur du contenant, à cause par exemple de son écrasement ou de la déformation lors d'une chute , il y a beaucoup moins de risque d'ouverture intempestive de la valve. Ceci n'empêche bien sûr pas la réouverture de la valve lors d'une remise en température ultérieure. Dans ce cas le composé d'étanchéité va revenir à l'état liquide, permettant à la feuille souple de reprendre sa forme initiale et à la valve de s'ouvrir dès que la pression interne au contenant augmente suffisamment.

La configuration de la chambre en creux 18 de même que le nombre d'orifices 19 et la dimension de ceux-ci peuvent varier en fonction des besoins.

On a représenté à la figure 9 un autre exemple de réalisation dans lequel la chambre en creux 18 est formée par un bossage annulaire 21 entourant une portion en saillie 22 dans laquelle est formé l'orifice de dégazage 23 de dimension réduite. Dans cette variante , l'orifice 23 de dégazage est encore mieux protégé de la contamination.

Il est à noter que la fixation de la feuille souple 7 sur l'opercule 3 par des moyens extérieurs de fixation tels qu'une enduction adhésive n'est pas strictement obligatoire. En effet la solidarisation entre la feuille souple 7 et l'opercule peut se faire avec le seul composé d'étanchéité, grâce à l'action des forces capillaires lorsque celui-ci est à l'état liquide, et pour autant que ledit composé adhère à la feuille souple et à l'opercule lorsqu'il est à l'état solide, faisant alors office d'enduction adhésive.

Il est également à noter que le composé d'étanchéité mis en oeuvre dans la présente invention présente un changement de phase réversible, entre la phase solide et la phase liquide. Cette disposition permet le fonctionnement de la valve lors du réchauffement ultérieur de l'emballage, par exemple juste avant la consommation du produit qu'elle contient, sans risque d'une montée en pression trop importante. Ainsi l'emballage de la présente invention permet de limiter les risques de brûlures qui peuvent se produire lors du réchauffement par le consommateur d'un emballage fermé par exemple d'un repas pré-cuisiné, brûlures qui sont dues à la projection du contenu chaud lors de l'ouverture ou voire même à l'explosion du contenant. Comme indiqué ci-dessus, l'emballage selon l'invention, ayant subi le traitement thermique suivi d'un refroidissement , présente un vide partiel dans l'espace de tête, c'est-à-dire l'espace qui se trouve entre le produit et l'opercule. Lorsque le consommateur réchauffe l'emballage , pour éliminer le vide partiel et créer de nouveau une pression positive à l'intérieur de l'emballage, il faut que la température soit montée à un niveau supérieur à celui du premier traitement thermique, le composé d'étanchéité étant alors de nouveau en phase liquide , la valve peut alors s'ouvrir dès que la pression intérieure est suffisante , avec dégazage.

Toutefois tout risque ne serait pas totalement exclu dans le cas où le réchauffement, mis en oeuvre par le consommateur, serait fait dans des conditions brutales , par exemple dans de l'eau bouillante ou dans un four à micro-ondes domestique de 800Watts de puissance.

Pour éviter totalement de tels risques , de préférence, on utilise comme feuille souple un matériau apte à se déformer de manière permanente dans des conditions brutales de température et /ou de pression. Ainsi la valve fonctionne correctement, comme décrit ci-dessus, dans un premier traitement thermique dans des conditions relativement douces. Mais si le réchauffement de l'emballage se fait dans des conditions brutales , par exemple dans l'eau bouillante ou dans un four à micro-ondes avec une puissance de l'ordre de 800Watts, la feuille souple se déforme sous l'effet de la température et/ou de la pression, ce qui crée un canal d'échappement permanent. On a donc une possibilité de dégazage instantané très important et, par la suite , même en cas de refroidissement de l'emballage non-ouvert, il ne se produit plus de vide partiel avec déformation éventuelle de l'emballage. A titre d'exemple , une feuille souple faite en polyester avec une épaisseur inférieure à 25µm présente une déformation permanente dans des conditions brutales de température et de pression.

## Revendications

**1.** Emballage , équipé d'une valve (12) et fermé par un opercule (3) , ladite valve (12) étant rapportée par-dessus une ouverture (4) donnant sur l'intérieur de l'emballage et pratiquée dans ledit opercule (3), **caractérisé en ce que** :
a) l'opercule (3) est dans un matériau rigide ou semi-rigide,
b) la valve comprend exclusivement :
- une feuille souple, s'étendant par-dessus une zone d'ouverture formée dans l'opercule et comportant l'orifice
- et un composé d'étanchéité disposé entre la feuille souple et l'opercule,
c) la zone d'ouverture a une section supérieure à 10 mm²,
a) et **en ce que** le composé d'étanchéité (11) est solide à température ambiante, étant alors imperméable aux gaz, aux liquides et de préférence aux micro-organismes , et passe à l'état liquide non collant par élévation de température en sorte que lors d'un traitement thermique , on a une succession de séquences de dégazage avec ouverture et fermeture de la valve, l'ouverture de la valve (12) étant obtenue sous l'effet d'une surpression interne à l'emballage 1 suffisante pour créer un canal d'échappement (13) dans le composé d'étanchéité (11) , à l'état liquide , réparti entre l' opercule (3) et la feuille souple (7), ledit canal (13) s'étendant entre l'ouverture (4) et un bord de la feuille souple, et la fermeture de la valve (12) étant obtenue , après dégazage partiel par le canal d'échappement (13) et alors qu'il règne encore une surpression dans l'emballage (1), par refermeture dudit canal d'échappement (13) du fait des forces de cohésion entre le composé d'étanchéité (11) à l'état liquide et l'opercule (3) d'une part et la feuille souple (7) d'autre part et en sorte que lors du refroidissement en fin de traitement thermique, la solidification du composé d'étanchéité (11) fixe la feuille souple (7) sur l'opercule (3) et verrouille ainsi la valve (12) dans la position fermée.

**1.** Emballage selon la revendication 1 **caractérisé en ce que** la zone d'ouverture est constituée par un simple orifice de dégazage, de section supérieure à 10 mm², pratiqué dans un opercule plan.

**2.** Emballage selon la revendication 1 **caractérisé en ce que** la zone d'ouverture est constituée par une chambre en creux (18), formée par exemple par emboutissage dans l'opercule , ladite chambre de section supérieure à 10 mm² étant percée d'un orifice de dégazage (19) de section plus petite.

**4.** Emballage selon l'une des revendications 1 à 3 **caractérisé en ce que** la zone d'ouverture (4) pratiquée dans l'opercule (3) a une section de l'ordre de 30 à 50mm².

**5.** Emballage selon l'une des revendications 1 à 4 **caractérisé en ce que** la feuille souple (7) est fixée partiellement sur l'opercule (3) de part et d'autre de l'ouverture (4) avec au moins une zone non fixée (10).

**6.** Emballage selon la revendication 5 **caractérisé en ce que** la valve (12) comporte deux zones 10 non fixées , opposées l'une à l'autre , entre la feuille souple 7 et l'opercule 3.

**7.** Emballage selon l'une des revendications 1 à 6 **caractérisé en ce que** l'opercule est en métal.

**8.** Emballage selon la revendication 57 comportant un pot et un couvercle, faisant office d'opercule, fixé par vissage, de manière étanche, sur la partie haute 2a du pot.

**9.** Emballage selon l'une des revendications 1 à 4, 7 ou 8 **caractérisé en ce que** la face supérieure (7c) de la feuille souple (7) est fixée, par exemple par collage, sur un élément plan (16), du type étiquette, lui-même fixé partiellement sur l'opercule (3) de part et d'autre de la zone d'ouverture (4), avec au moins une zone non fixée.

**10.** Emballage selon l'une des revendications 1 à 9 **caractérisé en ce qu'**il comporte un élément plan poreux (15) fixé , au-dessus de l'orifice (1), sur la face intérieure (14) de l'opercule (3).

**11.** Emballage selon l'une des revendications 1 à 10 **caractérisé en ce qu'**il comporte une languette (17) , fixée à ou prolongeant la feuille souple (7) ou l'élément plan du type étiquette (16).

**12.** Emballage selon l'une des revendications 1 à 11 **caractérisé en ce que** la feuille souple est dans un matériau à déformation permanente dans des conditions brutales de température et de pression.

**13.** Emballage selon la revendication 12 **caractérisé en ce que** la feuille souple est une feuille de polyester ayant une épaisseur inférieure à 25µm.
